# FASCICULE DE BREVET EUROPEEN

(11) **EP 1 608 536 B1**
(45) Date de publication et mention de la délivrance du brevet: **04.05.2011**
(21) Numéro de dépôt: 04742293.6
(22) Date de dépôt: 19.03.2004
(51) Int. Cl.: B60R 21/00

(54) **SUPPORT POUR UNE PIECE DE CARROSSERIE DE VEHICULE AUTOMOBILE**
VORRICHTUNG ZUR ABSTÜTZUNG EINES KAROSSERIETEILES EINES KRAFTFAHRZEUGES
SUPPORT FOR A PART OF THE CHASSIS OF A MOTOR VEHICLE

(30) Priorité: 01.04.2003 FR 0304044
(43) Date de publication de la demande: 28.12.2005
(73) Titulaire: Renault s.a.s., 92100 Boulogne Billancourt (FR)
(72) Inventeur: ZANOLIN, Dominique, F-78150 Le Chesnay (FR); TETU, Yvon, F-92250 La Garenne Colombe (FR); MACQUAIRE, Bruno, F-91190 Gif-Sur-Yvette (FR)
(86) Numéro de dépôt international: PCT/FR2004/000677
(87) Numéro de publication internationale: WO 2004/089698

(56) Documents cités:
- WO-A-97/09203
- DE-A- 2 922 893
- DE-A- 10 102 187
- DE-A- 10 136 898

## Description

La présente invention concerne un support destiné à maintenir une pièce de carrosserie sur une structure d'un véhicule automobile.

Une carrosserie de véhicule automobile est communément constituée d'une pluralité d'éléments distincts qui sont solidarisés sur une structure rigide, formant châssis. Parmi ces éléments, on distingue notamment les deux ailes avants qui sont plus particulièrement destinées à recouvrir et à entourer les roues avants du véhicule. On distingue également le capot avant qui est articulé dans une zone proche du pare-brise et qui repose à l'opposé sur une structure dite FAT, pour face avant technique.

Pour maintenir une aile sur une structure de carrosserie de véhicule automobile, il est connu d'utiliser un support formant interface entre la face interne de l'aile en question et la caisse proprement dite. Ce support est généralement doté d'un certain nombre d'éléments de liaison, formant points de fixation, sur lesquels vient se solidariser notamment la partie supérieure de l'aile. Par ailleurs, le support est lui-même fixé à la structure de carrosserie, généralement par vissage.

Ce type de support d'aile présente toutefois l'inconvénient d'être incompatible avec les futures normes concernant la protection des piétons en cas de choc avant avec un véhicule automobile. De part le montage rigide que ce genre de support engendre, l'aile n'est en effet pas en mesure d'amortir même partiellement un quelconque impact, et donc de limiter les risques de lésions corporelles de la victime. Tout choc sur la partie supérieure de l'aile intervient en fait sensiblement au droit des éléments de fixation dont la rigidité structurelle, combinée à celle du corps du support d'aile, est de nature à résister à un éventuel enfoncement de ladite aile.

Dans le même ordre d'idées, le capot avant repose sur la FAT en plusieurs points d'appui, dont au moins un intègre la serrure de capot. En cas de choc similaire à ce qui a été précédemment décrit, ces points d'appui question vont également engendrer une résistance à l'enfoncement du capot.

Il est également connu des solutions d'amortissement de choc piéton présentées aux documents brevet DE 101 02 187 A, qui décrit un véhicule automobile selon le préambule de la revendication 1, et DE 101 36 898 A.

Pour remédier à ce type de difficultés, on a imaginé utiliser des supports de pièces de carrosserie dotés d'éléments de fixation déformables. Cependant, il s'est avéré que la résistance de tels dispositifs demeurait toujours trop importante malgré la raideur moindre de chaque élément de déformation pris isolément.

Aussi le problème technique à résoudre, par l'objet de la présente invention, est de proposer un support pour une pièce de carrosserie de véhicule automobile, comportant au moins un élément de liaison destiné à la fixation de la pièce, support qui permettrait d'éviter les problèmes de l'état de la technique en offrant notamment aux piétons une sécurité sensiblement augmentée en cas de choc sur la partie avant du véhicule automobile ainsi équipé.

La solution au problème technique posé consiste, selon la présente invention, en ce que chaque élément de liaison est apte à se désolidariser du support lorsqu'une force d'intensité donnée est appliquée audit élément de liaison.

L'invention telle qu'ainsi définie présente l'avantage de permettre de passer outre la rigidité intrinsèque de chaque élément de liaison, dès qu'on applique audit élément de liaison un effort dont l'intensité est supérieure à un seuil déterminé. Dans le cas présent, il s'agit d'une force de pression causée par l'impact sur la pièce de carrosserie considérée, c'est-à-dire la partie supérieure de l'aile ou la face extérieure du capot dans les deux cas de figures envisagés précédemment à titre d'exemples.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 illustre partiellement, et en perspective, la partie avant d'un véhicule automobile doté d'un support d'aile conforme à l'invention.
La figure 2 représente en perspective de dessus le support d'aile de la figure 1.
La figure 3 est une vue schématique d'un support d'aile selon un premier mode de réalisation de l'invention.
La figure 4 fait apparaître une vue schématique d'un support d'aile selon un second mode de réalisation de l'invention.
La figure 5 constitue une vue schématique d'un support d'aile selon un troisième mode de réalisation de l'invention.
La figure 6 montre le positionnement relatif des différents éléments représentés à la figure 1, au moment d'un impact sur la partie supérieure de l'aile.
La figure 7 est une vue similaire à la figure 6, dans laquelle le positionnement relatif est considéré à un moment situé juste après l'impact.
La figure 8 constitue une vue similaire aux figures 6 et 7, mais l'instant considéré est situé bien après l'impact.
La figure 9 représente la partie avant d'un véhicule automobile doté d'un support de capot conforme à l'invention.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

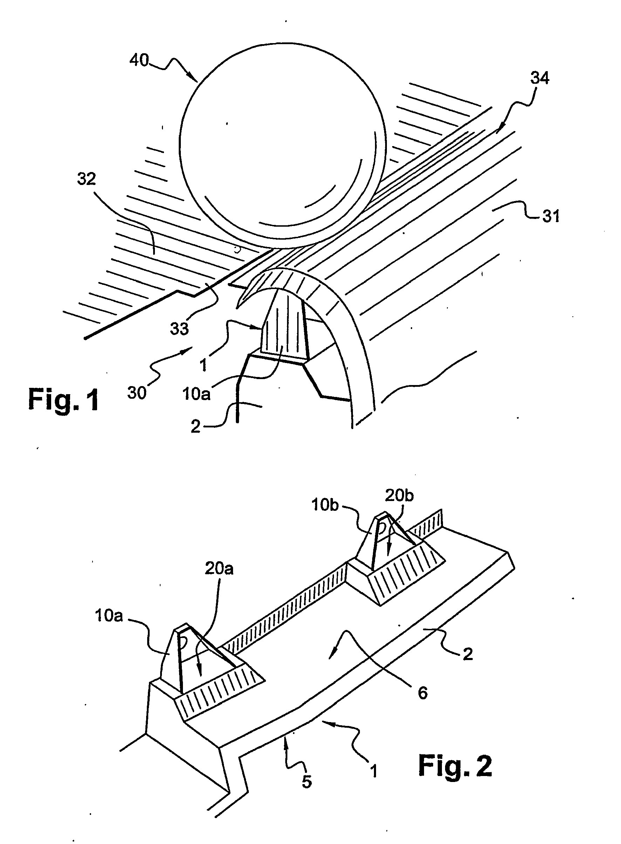

La figure 1 illustre, à titre d'exemple, la partie avant d'un véhicule automobile 30 au moment d'un choc avec un piéton. On distingue un support 1 sur lequel est fixée une aile de carrosserie 31, mais également un capot 32 dont le bord latéral 33 est adjacent à la partie supérieure 34 de ladite aile 31. Un élément extérieur 40, pouvant correspondre par exemple à la tête du piéton, est par ailleurs représenté de manière à matérialiser l'impact au niveau la partie supérieure 34 de l'aile 31.

La figure 2 fait apparaître plus clairement le support d'aile 1 de la figure 1. Dans ce mode particulier de réalisation, choisi uniquement à titre d'exemple, le support d'aile 1 est pourvu de deux éléments de liaison 10a, 10b qui forment autant de points de fixation pour la partie supérieure 34 de l'aile 31. Le nombre et le positionnement des éléments de liaison 10a, 10b, sur le corps 2 du support d'aile 1, sont bien entendu variables. Le corps 2 peut par ailleurs prendre toute forme adaptée à sa fonction d'interface. Sa face inférieure 5 peut ainsi être avantageusement conformée de manière à épouser au mieux la partie du châssis sur laquelle elle vient se fixer par vissage. Sa face supérieure 6 peut quant à elle prendre une forme quelconque, sous réserve de tenir compte du positionnement des éléments de liaison 10a, 10b.

Conformément à l'objet de la présente invention, chaque élément de liaison 10a, 10b est apte à se désolidariser du support d'aile 1 sous un effort donné, c'est-à-dire dans le cas présent, lorsqu'une force de pression d'intensité déterminée est appliquée audit élément de liaison 10a, 10b.

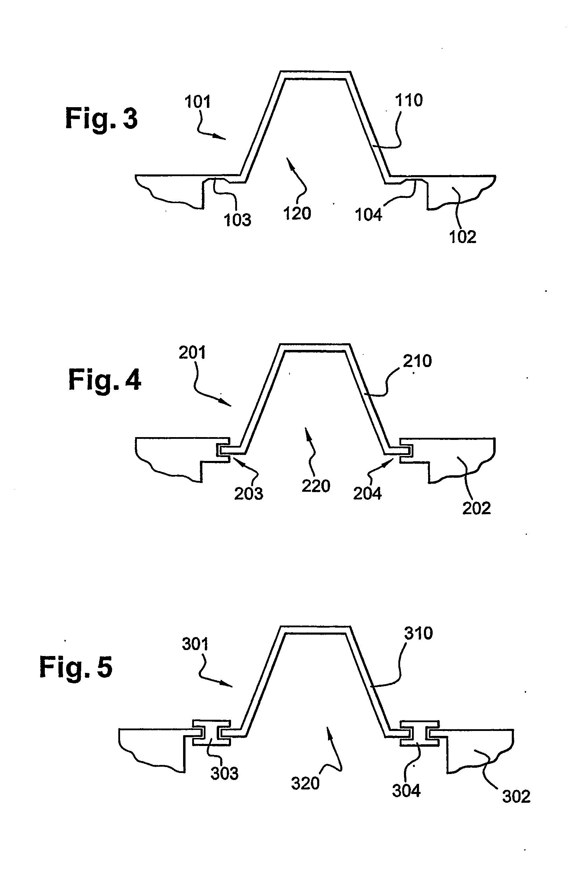

La figure 3 représente de manière schématique un support d'aile 101 selon un premier mode de réalisation de l'invention, qui correspond par ailleurs à celui de l'exemple des figures 1, 2 et 6 à 8. L'élément de liaison 110 fait ici partie intégrante du support d'aile 101, et il est apte à se désolidariser du corps 102 dudit support d'aile 101 par rupture. Cela signifie que l'élément de liaison 110 et la partie principale 102 du support d'aile 101 font parties d'une seule et même pièce monobloc. Cela implique que l'élément de liaison 110 n'est en mesure de se désolidariser du corps 102 que par cassure de la continuité structurelle entre ces deux parties du support d'aile 101.

Selon une particularité de ce premier mode de réalisation, la jonction entre l'élément de liaison 110 et le corps 102 du support d'aile 101 est constituée par au moins une zone 103, 104, dite de rupture, dont la résistance mécanique est sensiblement inférieure à celles dudit élément de liaison 110 d'une part, et dudit corps 102 d'autre part. Dans cet exemple de réalisation, l'élément de liaison 110 est en fait relié au corps 102 par deux zones de rupture 103, 104 distinctes, qui sont situées en opposition de part et d'autre dudit élément de liaison 110. En raison de la faiblesse de leurs caractéristiques de résistance mécanique, ces zones de ruptures 103, 104 vont se rompre avant tout autre partie du support d'aile 101 lorsque qu'une force d'intensité suffisante vient à être appliquée sur l'élément de liaison 110.

De manière particulièrement avantageuse, chaque zone de rupture 103, 104 présente une section sensiblement inférieure aux épaisseurs respectives des portions directement adjacentes, de l'élément de liaison 110 d'une part et du corps 102 du support d'aile 101 d'autre part. En effet, une réduction de section constitue une solution optimale pour diminuer localement la résistance mécanique d'une pièce réalisée dans un matériau unique et homogène, comme c'est généralement le cas avec un support d'aile monobloc. Les éventuelles contraintes mécaniques, que la pièce va être amenées à subir, vont en effet avoir un maximum d'impact au niveau des parties les plus fragiles. Par conséquent, si une rupture doit se produire, ce sera précisément au niveau de ces zones de faiblesse.

Quoi qu'il en soit, la cassure des zones de rupture 103, 104 peut être véritablement programmée pour se produire à une intensité d'effort déterminée. Pour cela, on pourra bien sûr jouer sur la section de chaque zone de rupture 103, 104, et notamment sur l'épaisseur. On pourra également modifier sa surface en la rendant plus ou plus grande suivant que l'on veut augmenter ou diminuer le seuil de rupture. Il est également envisageable d'amorcer la cassure en ménageant par exemple des entailles et/ou des pré découpages dans les zones de rupture 103, 104.

Dans cet exemple de réalisation, le support d'aile 101 est réalisé entièrement en matière plastique. Ce matériau est en effet idéal pour concevoir un support d'aile monobloc suffisamment rigide pour pouvoir garantir, d'une part, un excellent positionnement géométrique de l'aile par rapport aux autres éléments de carrosserie lors du montage, et d'autre part, une bonne tenue de l'ensemble dans le temps. Il est par ailleurs parfaitement possible de conférer une certaine élasticité au support d'aile 101 si nécessaire, en choisissant un matériau plastique plus ou moins viscoélastique.

Dans le second mode de réalisation illustré à la figure 4, l'élément de liaison 210 est constitué par un élément indépendant qui coopère directement par emboîtement avec le corps 202 du support d'aile 201. L'élément de liaison 210 est en outre apte à se désolidariser du corps 202 par désengagement mutuel. L'élément de liaison 210 est ici structurellement indépendant du corps 202 du support d'aile 201, mais il y est assujetti par toute technique de maintien direct consistant en un engagement mutuel de parties sensiblement complémentaires. Dans la pratique, il pourra ainsi s'agir d'un emboîtement plus ou moins complexe, d'un sertissage, d'un enchâssement, etc.

Selon une particularité de ce second mode de réalisation, la jonction entre l'élément de liaison 210 et le corps 202 du support d'aile 201 est constituée par au moins une zone 203, 204, dite de liaison, dans laquelle ledit élément de liaison 210 et ledit corps 202 coopèrent localement par emboîtement. Dans cet exemple de réalisation, l'élément de liaison 210 est relié au corps 202 par deux zones de liaison 203, 204 distinctes, qui sont situées en opposition de part et d'autre dudit élément de liaison 210. En raison de la faiblesse des liaisons mécaniques ainsi réalisées, comparée à la résistance structurelle intrinsèque des éléments assemblés, l'élément de liaison 210 et le corps 202 vont avoir tendance à ce dissocier inévitablement au niveau de ces zones de liaison 203, 204, lorsque qu'une force d'intensité suffisante vient à être appliquée sur ledit élément de liaison 210.

Conformément une caractéristique avantageuse de l'invention, dans chaque zone de liaison 203, 204, l'emboîtement est réalisé suivant un sens distinct du sens de déplacement de l'élément de liaison 210 après sa désolidarisation du support d'aile 201. Cela signifie que la direction d'emboîtement peut être variable, et même identique à la direction d'enfoncement de l'élément de liaison 210, mais son sens doit impérativement être distinct de celui dudit enfoncement. A ce titre, l'exemple de la figure 4 constitue un cas sensiblement limite, puisque la direction et le sens d'emboîtement sont perpendiculaires à l'enfoncement. En tout état de cause, le sens d'emboîtement doit être dirigé sensiblement vers le haut pour que la désolidarisation puisse s'effectuer lors du déplacement vers le bas de l'élément de liaison 210.

Le troisième mode de réalisation de la figure 5 est remarquable en ce que l'élément de liaison 310 est constitué par un élément indépendant qui est assemblé au corps 302 du support d'aile 301 au moyen d'au moins un élément intermédiaire 304, 305, formant fusible. L'élément de liaison 310 est par ailleurs en mesure de se désolidariser du support d'aile 301 par rupture de chaque élément intermédiaire 303, 304. Là aussi, l'élément de liaison 310 est structurellement indépendant du corps 302 du support d'aile 310, mais il y est assujetti de manière indirecte.

Selon une particularité de ce troisième mode de réalisation, chaque élément intermédiaire 303, 304 présente une résistance mécanique sensiblement inférieure aux résistances mécaniques respectives de l'élément de liaison 310 d'une part, et du corps 302 du support d'aile 301 d'autre part. Dans cet exemple de réalisation, l'élément de liaison 310 est relié au corps 302 au moyen de deux éléments intermédiaires distinctes 303, 304, qui sont situées en opposition de part et d'autre dudit élément de liaison 310. En raison de la faiblesse de leurs caractéristiques de résistance mécanique, ces éléments intermédiaires 303, 304 de section en H vont se rompre avant tout autre partie du support d'aile 301 lorsque qu'une force d'intensité suffisante vient à être appliquée sur l'élément de liaison 310. Les éléments intermédiaires 303, 304 ont une fonction de fusibles.

Il est à noter que dans le cas où un support d'aile 201, 301 n'est pas constitué par une pièce monobloc, une combinaison de matériaux différents est parfaitement possible. Dans le cadre du troisième mode de réalisation par exemple, le couplage d'un élément de liaison 310 en métal avec un corps 302 également en métal, au moyen d'éléments intermédiaires 303, 304 en plastique, est tout à fait envisageable.

Ainsi qu'on peut le voir clairement notamment sur les figures 2 et 6 à 8, le support d'aile 1 comporte avantageusement un espace libre 20a, 20b ménagé sensiblement à l'aplomb de chaque élément de liaison 10a, 10b. Chaque espace libre 20a, 20b est ainsi en mesure de permettre au moins partiellement l'enfoncement de l'élément de liaison 10a, 10b dans le corps 2 du support d'aile 1, après désolidarisation.

De préférence, l'espace libre 20a, 20b est ménagé de manière à pouvoir recevoir entièrement l'élément de liaison 10a, 10b après sa désolidarisation. En d'autres termes, l'espace libre 20a, 20b présente des dimensions correspondant sensiblement à l'encombrement général de l'élément de liaison 10a, 10b qui lui est associé.

Cependant, si tel ne devait pas être le cas, une variante de réalisation de l'invention prévoit avantageusement de doter le support d'aile d'au moins un élément de liaison en mesure de se déformer suivant sensiblement sa direction de déplacement dans le corps du support d'aile, c'est-à-dire après désolidarisation. Pour cela, chaque élément de liaison est pourvu d'une rigidité structurelle relativement faible, ce qui permet une réduction de son encombrement général par écrasement, notamment au niveau de sa hauteur, lorsqu'une force d'intensité donnée lui est appliquée. L'élément de liaison peut ainsi s'effacer complètement dans un espace libre de dimensions réduites, ménagé dans le corps du support d'aile.

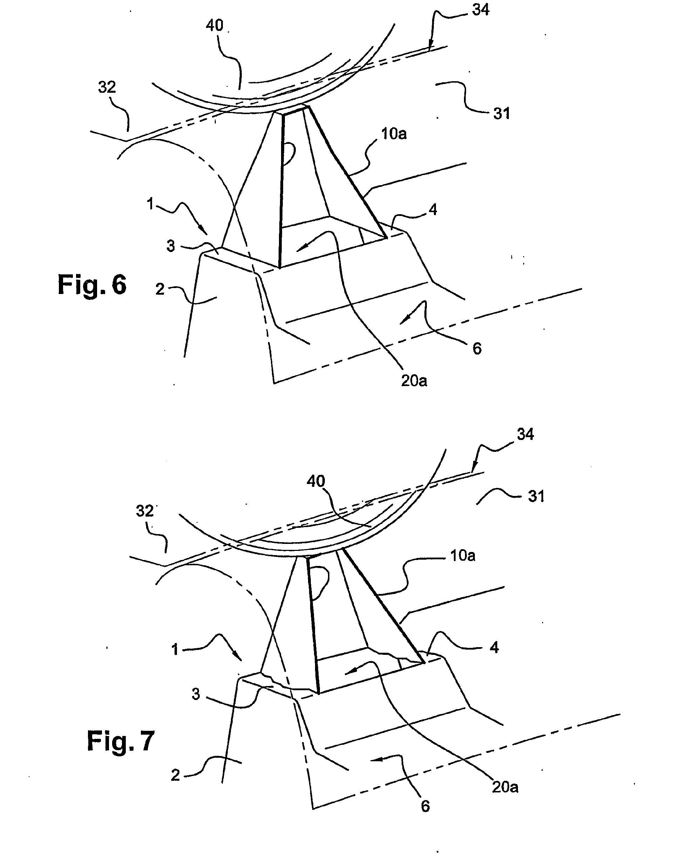

Les figures 6 à 8 illustrent parfaitement le principe d'effacement des éléments de liaison 10a, 10b dans le corps 2 du support d'aile 1.

La figure 6 correspond précisément à l'instant du choc. La tête 40 du piéton est au contact de la partie supérieure 34 de l'aile 31, mais l'élément de liaison 10a n'a pas encore subi de pressions susceptibles d'entraîner de quelconque déformations, et à fortiori de cassures au niveau des zones de rupture 3, 4.

Sur la figure 7 par contre, la pression due à l'impact est transmise aux zones de rupture 3, 4 par l'intermédiaire de l'élément de liaison 10a puisque ce dernier présente une rigidité très supérieure. Les zones de rupture 3, 4 commence alors à se déformer et à se rompre, notamment celles figurée au premier plan. L'élément de liaison 10a commence à s'enfoncer progressivement dans l'espace libre 20a avantageusement ménagé dans le corps 2 du support d'aile 1.

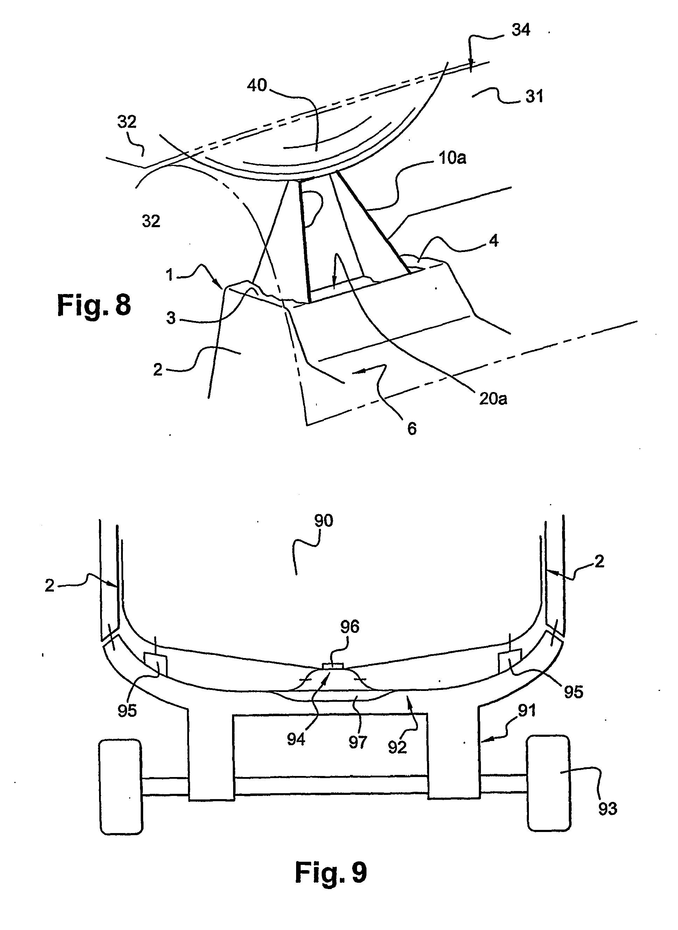

Conformément à la figure 8, le choc qui se poursuit entraîne la casse complète des deux zones de rupture 3, 4. l'élément de liaison 10a est alors libre de descendre dans le corps 2, sans générer de raideur à l'ensemble. Seule intervient en effet la rigidité structurelle de l'aile 31, et éventuellement celle du capot 32, car ces éléments sont toujours attachés à la structure de carrosserie. Par conséquent, à ce stade du choc, seuls l'aile 31 et le capot 32 vont faire office d'amortisseurs au fur et à mesure qu'ils vont se déformer. L'élément de liaison 10a ne peut en aucune raison constituer un point dure car, d'une part, il n'est plus solidaire du corps 2 du support d'aile 1, et d'autre part, il est en mesure de s'enfoncer librement dans l'espace libre 20a prévu à cet effet.

La figure 9 illustre, à titre de nouvel exemple, la partie avant d'un véhicule automobile 30 qui est doté d'un capot avant 90 reposant sur un support de capot 91, dit face avant technique. Cette face avant technique 91 est solidarisée à une traverse avant, elle-même fixée sur les longerons avant 93 du véhicule automobile 30. En cas de choc avec un piéton venant heurter le capot 90, ce dernier doit s'affaisser au plus près possible de la face avant 91. Pour cela, et conformément à l'invention, les éléments de liaison 94, 95 sont en mesure de se désolidariser du corps 92 de la face avant technique 91. Plus particulièrement, l'élément de liaison 94, sur lequel est montée la serrure 96 permettant l'immobilisation du capot avant 90, est apte à se désolidariser de la face avant technique 91 pour s'effacer dans l'espace libre 97 et laisser ainsi le capot avant 90 descendre. Avantageusement, la serrure 96 reste solidaire du capot avant 90 et de l'élément de liaison 94, et accompagne alors le mouvement de descente du capot avant 90. Les éléments de liaison 94, 95 peuvent présenter les formes de réalisation décrites précédemment en référence aux figures 3 à 5.

Il sera compris que, dans l'ensemble des modes de réalisation présentés, les matériaux utilisés et la vitesse d'impact ne modifient en rien le concept de l'invention.

Bien entendu, l'invention concerne également tout véhicule automobile 30 doté d'au moins un support de carrosserie 1, 91, 101, 201, 301 de carrosserie tel que précédemment décrit. Il est à noter que la notion de véhicule automobile 30 concerne ici tout véhicule à moteur, c'est-à-dire tout engin roulant capable de progresser de lui-même à l'aide d'un moteur, quel que soit le type dudit moteur et indépendamment de la taille et/ou du poids dudit véhicule. Par conséquent, un véhicule automobile pourra désigner aussi bien une voiture, un véhicule utilitaire, un camion ou un autobus par exemple.

## Revendications

1. Véhicule automobile (30), comportant une structure formant châssis du véhicule, une pièce de carrosserie (31, 90) et au moins un support de pièce de carrosserie (1, 91, 101, 201, 301) maintenant ladite pièce de carrosserie sur le châssis, le support comportant un corps (2, 92, 102, 202, 302) fixé sur ledit châssis de ce véhicule et au moins un élément de liaison (10a, 10b, 94, 95, 110, 210, 310) fixé à la pièce de carrosserie (31, 90), chaque élément de liaison (10a, 10b, 94, 95, 110, 210, 310) étant apte à se désolidariser du corps (2, 92, 102, 202, 302) lorsqu'une force d'intensité donnée est appliquée audit élément de liaison (10a, 10b, 94, 95, 110, 210, 310), **caractérisé en ce que** le support comporte un espace libre (20a, 20b, 97, 120, 220, 320) sensiblement à l'aplomb de chaque élément de liaison (10a, 10b, 94, 95, 110, 210, 310), ledit espace libre (20a, 20b, 97, 120, 220, 320) étant apte à permettre un enfoncement au moins partiel dudit élément de liaison associé (10a, 10b, 94, 95, 110, 210, 310) dans ledit corps (2), après désolidarisation.

2. Véhicule automobile (30), selon la revendication 1, **caractérisé en ce que** l'élément de liaison (10a, 10b, 94, 95, 110) fait partie intégrante du corps (2, 92, 102), et **en ce que** ledit élément de liaison (10a, 10b, 94, 95, 110) est apte à se désolidariser du corps (2, 92, 102) du dit support (1, 91, 101) par rupture.

3. Véhicule automobile (30) selon la revendication 2, **caractérisé en ce que** la jonction entre l'élément de liaison (10a, 10b, 94, 95, 110) et le corps (2, 92, 102) du support (1, 91, 101) est constituée par au moins une zone (3, 4, 103, 104), dite de rupture, dont la résistance mécanique est sensiblement inférieure à celle dudit élément de liaison (10a, 10b, 94, 95, 110) d'une part, et à celle dudit corps (2, 92, 102) d'autre part.

4. Véhicule automobile (30) selon la revendication 3, **caractérisé en ce que** chaque zone de rupture (3, 4, 103, 104) présente une section sensiblement inférieure aux sections respectives des portions directement adjacentes, de l'élément de liaison (10a, 10b, 94, 95, 110) d'une part, et du corps (2, 92, 102) du support (1, 91, 101) d'autre part, ces zones de ruptures (103, 104) ayant des caractéristiques de résistance mécanique telles qu'elles sont adaptées à se rompre avant tout autre partie du support (101) lorsque qu'une force d'intensité suffisante est appliquée sur l'élément de liaison 110.

5. Véhicule automobile (30) selon la revendication 4, **caractérisé en ce que** l'élément de liaison (110) est relié au corps (102) par deux zones de rupture (103, 104) distinctes, qui sont situées en opposition de part et d'autre dudit élément de liaison (110).

6. Véhicule automobile (30) selon la revendication 1, **caractérisé en ce que** l'élément de liaison (210) est constitué par un élément indépendant qui coopère directement par emboîtement avec le corps (202) du support (201), et **en ce que** ledit élément de liaison (210) est en apte à se désolidariser dudit corps (202) par désengagement mutuel.

7. Véhicule automobile (30) selon la revendication 6, **caractérisé en ce que** la jonction entre l'élément de liaison (210) et le corps (202) du support (201) est constituée par au moins une zone (203, 204), dite de liaison, dans laquelle ledit élément de liaison (210) et ledit corps (202) coopèrent localement par emboîtement.

8. Véhicule automobile (30) selon la revendication 7, **caractérisé en ce que** dans chaque zone de liaison (203, 204), l'emboîtement est réalisé suivant un sens distinct du sens de déplacement de l'élément de liaison (210) après sa désolidarisation du support d'aile (201).

9. Véhicule automobile (30) selon la revendication 1, **caractérisé en ce que** l'élément de liaison (310) est constitué par un élément indépendant qui est assemblé au corps (302) du support (301) au moyen d'au moins un élément intermédiaire (303, 304), formant fusible, et **en ce que** ledit élément de liaison (310) est apte à se désolidariser dudit corps (302) par rupture de chaque élément intermédiaire (303, 304).

10. Véhicule automobile (30) selon la revendication 9, **caractérisé en ce que** chaque élément intermédiaire (303, 304) présente une résistance mécanique sensiblement inférieure à celle de l'élément de liaison (310) d'une part, et à celle du corps (302) du support (301) d'autre part.

11. Véhicule automobile (30) selon l'une quelconque des revendications 1 à 10, **caractérisé en ce que** chaque espace libre (20a, 20b, 97, 120, 220, 320) est apte à recevoir entièrement l'élément de liaison associé (10a, 10b, 94, 95, 110, 210, 310), après désolidarisation.

12. Véhicule automobile (30) selon l'une quelconque des revendications 1 à 11, **caractérisé en ce que** l'élément de liaison (10a, 10b, 94, 95, 110, 210, 310) est en outre apte à se déformer suivant sensiblement sa direction de déplacement après désolidarisation, lorsqu'une force d'intensité donnée lui est appliquée.

13. Véhicule automobile (30) selon l'une quelconque des revendications 1 à 12, **caractérisé en ce que** la pièce de carrosserie est une aile (31) de véhicule automobile (30).

14. Véhicule automobile (30) selon l'une quelconque des revendications 1 à 12, **caractérisé en ce que** la pièce de carrosserie est un capot (90) de véhicule automobile (30).

## Claims

1. Automotive vehicle (30) comprising a structure forming the chassis of the vehicle, a bodywork part (31, 90) and at least one bodywork part support (1, 91, 101, 201, 301) holding said bodywork part on the chassis, the support comprising a body (2, 92, 102, 202, 302) fixed to said chassis of said vehicle and at least one connector element (10a, 10b, 94, 95, 110, 210, 310) fixed to the bodywork part (31, 90), each connector element (10a, 10b, 94, 95, 110, 210, 310) being capable of being detached from the body (2, 92, 102, 202, 302) when a force of a given intensity is applied to said connector element (10a, 10b, 94, 95, 110, 210, 310), **characterized in that** the support comprises a free space (20a, 20b, 97, 120, 220, 320) which is substantially perpendicular to each connector element (10a, 10b, 94, 95, 110, 210, 310), said free space (20a, 20b, 97, 120, 220, 320) being capable of enabling said associated connector element (10a, 10b, 94, 95, 110, 210, 310) to be at least partially pushed into said body (2) after detachment.

2. Automotive vehicle (30) according to Claim 1, **characterized in that** the connector element (10a, 10b, 94, 95, 110) forms an integral part of the body (2, 92, 102) and **in that** said connector element (10a, 10b, 94, 95, 110) is capable of being detached from the body (2, 92, 102) of said support (1, 91, 101) by breaking off.

3. Automotive vehicle (30) according to Claim 2, **characterized in that** the join between the connector element (10a, 10b, 94, 95, 110) and the body (2, 92, 102) of the support (1, 91, 101) consists of at least one area (3, 4, 103, 104), known as a frangible area, the mechanical strength thereof being substantially less than that of said connector element (10a, 10b, 94, 95, 110), on the one hand, and that of said body (2, 92, 102), on the other hand.

4. Automotive vehicle (30) according to Claim 3, **characterized in that** each frangible area (3, 4, 103, 104) is substantially reduced in section, compared to the respective sections of the directly adjacent portions of the connector element (10a, 10b, 94, 95, 110), on the one hand, and of the body (2, 92, 102) of the support (1, 91, 101), on the other hand, said frangible areas (103, 104) having mechanical strength characteristics such that they are capable of breaking before any other part of the support (101) when a force of sufficient intensity is applied to the connector element (110).

5. Automotive vehicle (30) according to Claim 4, **characterized in that** the connector element (110) is connected to the body (102) by two separate frangible areas (103, 104), which are located opposite one another on either side of said connector element (110).

6. Automotive vehicle (30) according to Claim 1, **characterized in that** the connector element (210) consists of a separate element which cooperates directly by interlocking with the body (202) of the support (201) and **in that** said connector element (210) is furthermore capable of being detached from said body (202) by mutual disengagement.

7. Automotive vehicle (30) according to Claim 6, **characterized in that** the join between the connector element (210) and the body (202) of the support (201) consists of at least one area (203, 204), known as the connection area, in which said connector element (210) and said body (202) cooperate locally by interlocking.

8. Automotive vehicle (30) according to Claim 7, **characterized in that** in each connection area (203, 204) the interlocking takes place in a direction which is different from the direction of displacement of the connector element (210) after the detachment thereof from the wing support (201).

9. Automotive vehicle (30) according to Claim 1, **characterized in that** the connector element (310) consists of a separate element which is mounted on the body (302) of the support (301) by means of at least one intermediate element (303, 304) forming a type of fuse, and **in that** said connector element (310) is capable of being detached from said body (302) by each intermediate element (303, 304) breaking off.

10. Automotive vehicle (30) according to Claim 9, **characterized in that** each intermediate element (303, 304) has a mechanical strength which is substantially less than that of the connector element (310), on the one hand, and that of the body (302) of the support (301), on the other hand.

11. Automotive vehicle (30) according to any one of Claims 1 to 10, **characterized in that** each free space (20a, 20b, 97, 120, 220, 320) is capable of entirely receiving the associated connector element (10a, 10b, 94, 95, 110, 210, 310) after detachment.

12. Automotive vehicle (30) according to any one of Claims 1 to 11, **characterized in that** the connector element (10a, 10b, 94, 95, 110, 210, 310) is also capable of being deformed substantially in the direction of displacement thereof after detachment, when a force of a given intensity is applied thereto.

13. Automotive vehicle (30) according to any one of Claims 1 to 12, **characterized in that** the bodywork part is a wing (31) of an automotive vehicle (30).

14. Automotive vehicle (30) according to any one of Claims 1 to 12, **characterized in that** the bodywork part is a bonnet (90) of an automotive vehicle (30).

## Patentansprüche

1. Kraftfahrzeug (30), das Folgendes umfasst: eine das Fahrzeugchassis bildende Struktur, ein Karosserieteil (31, 90) und mindestens eine Karosserieteilstütze (1, 91, 101, 201, 301), die das Karosserieteil an dem Chassis hält, wobei die Stütze einen Körper (2, 92, 102, 202, 302), der an dem Chassis dieses Fahrzeugs befestigt ist, und mindestens ein Verbindungselement (10a, 10b, 94, 95, 110, 210, 310), das an dem Karosserieteil (31, 90) befestigt ist, aufweist, wobei sich jedes Verbindungselement (10a, 10b, 94, 95, 110, 210, 310) von dem Körper (2, 92, 102, 202, 302) lösen kann, wenn eine Kraft mit gegebener Stärke an das Verbindungselement (10a, 10b, 94, 95, 110, 210, 310) angelegt wird, **dadurch gekennzeichnet, dass** die Stütze einen freien Raum (20a, 20b, 97, 120, 220, 320) im Wesentlichen in der Lotrechten jedes Verbindungselements (10a, 10b, 94, 95, 110, 210, 310) aufweist, wobei der freie Raum (20a, 20b, 97, 120, 220, 320) ein zumindest teilweises Einpressen des zugehörigen Verbindungselements (10a, 10b, 94, 95, 110, 210, 310) in den Körper (2) nach dem Lösen gestatten kann.

2. Kraftfahrzeug (30) nach Anspruch 1, **dadurch gekennzeichnet, dass** das Verbindungselement (10a, 10b, 94, 95, 110) einen integralen Teil des Körpers (2, 92, 102) bildet und dass sich das Verbindungselement (10a, 10b, 94, 95, 110) durch Zerbrechen von dem Körper (2, 92, 102) der Stütze (1, 91, 101) lösen kann.

3. Kraftfahrzeug (30) nach Anspruch 2, **dadurch gekennzeichnet, dass** die Verbindungsstelle zwischen dem Verbindungselement (10a, 10b, 94, 95, 110 und dem Körper (2, 92, 102) der Stütze (1, 91, 101) durch mindestens eine so genannte Bruchzone (3, 4, 103, 104) gebildet wird, deren mechanische Festigkeit wesentlich geringer ist als einerseits die des Verbindungselements (10a, 10b, 94, 95, 110) und andererseits die des Körpers (2, 92, 102).

4. Kraftfahrzeug (30) nach Anspruch 3, **dadurch gekennzeichnet, dass** jede Bruchzone (3, 4, 103, 104) einen Abschnitt aufweist, der wesentlich kleiner ist als die jeweiligen Abschnitte der direkt benachbarten Teile einerseits des Verbindungselements (10a, 10b, 94, 95, 110) und andererseits des Körpers (2, 92, 102) der Stütze (1, 91, 101) wobei diese Bruchzonen (103, 104) solche mechanischen Festigkeitseigenschaften haben, dass sie vor jedem anderen Teil der Stütze (101) zerbrechen können, wenn eine Kraft mit ausreichender Stärke an das Verbindungselement (110) angelegt wird.

5. Kraftfahrzeug (30) nach Anspruch 4, **dadurch gekennzeichnet, dass** das Verbindungselement (110) durch zwei verschiedene Bruchzonen (103, 104) mit dem Körper (102) verbunden ist, die sich auf beiden Seiten des Verbindungselements (110) einander gegenüber befinden.

6. Kraftfahrzeug (30) nach Anspruch 1, **dadurch gekennzeichnet, dass** das Verbindungselement (210) aus einem unabhängigen Element besteht, das durch Ineinandergreifen direkt mit dem Körper (202) der Stütze (201) zusammenwirkt, und dass sich das Verbindungselement (210) weiterhin von dem Körper (202) durch auseinander ausrücken lösen kann.

7. Kraftfahrzeug (30) nach Anspruch 6, **dadurch gekennzeichnet, dass** die Verbindungsstelle zwischen dem Verbindungselement (210) und dem Körper (202) der Stütze (201) durch mindestens eine so genannte Verbindungszone (203, 204) gebildet wird, in der das Verbindungselement (210) und der Körper (202) durch Ineinandereingreifen lokal zusammenwirken.

8. Kraftfahrzeug (30) nach Anspruch 7, **dadurch gekennzeichnet, dass** in jeder Verbindungszone (203, 204) das Ineinandereingreifen gemäß einer Richtung erfolgt, die von der Richtung der Verschiebung des Verbindungselements (210) nach seinem Lösen von der Kotflügelstütze (201) verschieden ist.

9. Kraftfahrzeug (30) nach Anspruch 1, **dadurch gekennzeichnet, dass** das Verbindungselement (310) durch ein unabhängiges Element gebildet wird, das mittels mindestens eines eine Sicherung bildenden Zwischenelements (303, 304) an den Körper (302) der Stütze (301) montiert ist und dass sich das Verbindungselement (310) durch Zerbrechen jedes Zwischenelements (303, 304) von dem Körper (302) lösen kann.

10. Kraftfahrzeug (30) nach Anspruch 9, **dadurch gekennzeichnet, dass** jedes Zwischenelement (303, 304) eine mechanische Festigkeit aufweist, die einerseits wesentlich geringer ist als die des Verbindungselements (310) und andererseits als die des Körpers (302) der Stütze (301).

11. Kraftfahrzeug (30) nach einem der Ansprüche 1 bis 10, **dadurch gekennzeichnet, dass** jeder freie Raum (20a, 20b, 97, 120, 220, 320) das zugehörige Verbindungselement (10a, 10b, 94, 95, 110, 210, 310) nach dem Lösen vollständig aufnehmen kann.

12. Kraftfahrzeug (30) nach einem der Ansprüche 1 bis 11, **dadurch gekennzeichnet, dass** sich jedes Verbindungselement (10a, 10b, 94, 95, 110, 210, 310) des Weiteren gemäß im Wesentlichen seiner Verschiebungsrichtung nach dem Lösen, wenn eine Kraft mit gegebener Stärke daran angelegt wird, verformen kann.

13. Kraftfahrzeug (30) nach einem der Ansprüche 1 bis 12, **dadurch gekennzeichnet, dass** das Karosserieteil ein Kotflügel (31) des Kraftfahrzeugs (30) ist.

14. Kraftfahrzeug (30) nach einem der Ansprüche 1 bis 12, **dadurch gekennzeichnet, dass** das Karosserieteil eine Haube (90) des Kraftfahrzeugs (30) ist.
